# EUROPEAN PATENT APPLICATION

(11) **EP 3 681 009 A1**
(43) Date of publication of application: **15.07.2020**
(21) Application number: 19305022.6
(22) Date of filing: 08.01.2019
(51) Int. Cl.: H02J 7/00, G06F 1/26, H04B 3/54

(54) **COUPLING MANAGER FOR MANAGING A MULTIMODAL ELECTRICAL COUPLING AND METHOD OF OPERATION**

(71) Applicant: Energysquare, 94160 Saint-Mandé (FR)
(72) Inventor: VASQUEZ, Pablo, 94160 SAINT-MANDÉ (FR); TOVEY, Valentin, 94160 SAINT-MANDÉ (FR); VIELPEAU, Damien, 94160 SAINT-MANDÉ (FR); LOLLO, Daniel, 75013 PARIS (FR)
(74) Representative: Bell, Mark

(57) **Abstract**

A multimodal electrical coupling, which may be comprised of any pair of conductive regions in a surface, is selectively coupled to a coupling communications interface in response to the detection of an article connected across the terminals of the coupling. The coupling communications interface obtains data characterising the article, and determines whether this information is consistent with the supply of power to the article, or communication with the article, in particular in terms of the power requirements of the article, and/or the identity, and corresponding authorisation status of the article. Where interaction is determined to be allowable, a transducer module is brought into connection with the multimodal electrical coupling, at which time the coupling communications interface may be decoupled. A corresponding reporting interface for integration in articles is also presented.

## Description

### Field of the invention

The present invention relates generally to establishment of electrical connections for example in a context supporting arbitrary device dispositions, such as planar recharging surfaces with multiple contact zones.

### Background of the invention

Over recent years portable electronic devices have become increasingly ubiquitous-telephones, media players, tablet and laptop computers, loT (Internet of Things) devices or the like and portable loudspeaker units are now widespread. With a tendency towards miniaturisation on one hand, and the increasing size and brightness of displays and expectancy of wireless connectivity on the other, demands on the energy storage capacity of the batteries of these devices are more and more challenging. In view of these considerations, users are increasingly subject to "low battery anxiety", where the level of charge of their various devices, and the time until the next opportunity to recharge them, is a continuous source of concern. An attempt to address this problem using stand-alone general purpose rechargeable battery units adds to the list of devices to be recharged and carried. This issue is further complicated by the range of power connectors and varying voltage requirements of these devices, which can make it necessary for individuals to carry a range of chargers and cables with them, nullifying many of the advantages of the devices miniaturisation.

WO2017046458 presents a partial solution to this problem.

Figure 1 presents aspects of the prior art approach provided by WO2017046458.

As shown, a nomadic electronic device 120 is positioned to be recharged on a planar mating surface 110 provided with a plurality of contact zones 111, 112, 113, 114, by using an adapter 1301.

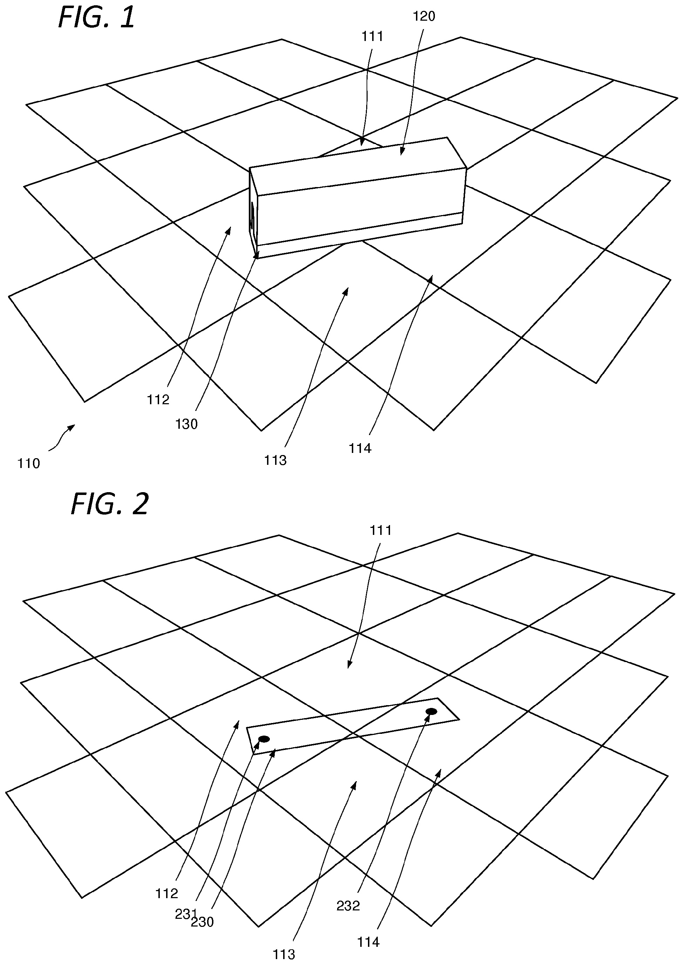

Figure 2 presents aspects of the prior art approach provided by WO2017046458 in further detail. As shown, the nomadic electronic device 120 is positioned to be recharged on a planar recharging surface 110 provided with a plurality of contact zones 111, 112, 113, 114, by using an adapter, which is represented in figure 2 as the footprint 230 of the adapter 130 on the surface 110. As shown in figure 2, the adapter 130 defines two electrically conducting terminals 231, 232 of small cross section in an external face of the adapter strip.

For each device to be energized, there is provision to abut an internal face of the strip against a face of the device and to engage a connector into the device on the side of a bent part of the strip to place the adapter between the device and the recharging surface so as to allow conduction from two of the contact zones, the terminals 231, 232 being spaced a predetermined distance apart which is much greater than their cross-sectional size. As described in WO2017046458, contact zones are selectively energized with current, so that the zones 112, 114 on which the two terminals 231, 232 are positioned respectively come into a functional state and allow recharging of the device 120 via the adapter 230.

As described in WO2017046458, in order to determine the status of each contact zone with a view to determining the presence of a device to be charged, there is provided a processing unit which is able to briefly drive independently each of the conductive zones from a low potential (e.g. 0V) to a high potential (e.g. 5V) . The processing unit also manages a data link to drive ADCs for measuring the current drawn by each conductive zone. If the current drawn corresponds to an expected current value for a chargeable device, the high voltage is maintained on the corresponding conductive zone. Otherwise, the element 80 is returned to the low voltage.

Accordingly, nomadic devices equipped with the proposed adapter can be placed freely on such a planar surface equipped with the described system, and hopefully be detected and provided with a power supply voltage accordingly.

A drawback of this approach lies in the fact that in a case where an electrical connection exists between any two conductive regions for some reason besides the presence of a chargeable device, for example due to a conductive article such as a metal tool or ornament being placed on the surface, the testing process will create a short circuit to ground through this connection, leading to a flow of current. Depending on the conductive properties of the article, this may appear to the controller as characteristic of a chargeable device, which may lead to an attempt to supply power to the article, leading to a waste of energy and possible damage to the article, the conductive zones or the controller.

US2010/022285 presents a related solution for retrofitting a mobile electronic device, which has an input power receptacle located on its side, to receive power from a power delivery pad that has a flat power delivery surface. A connector assembly is connectable to the mobile electronic device by plugging a connector into the input power receptacle of the device. A power receiver assembly connects pivotally and electrically to the connector assembly by magnetism. The power receiver assembly is pivotal to position a power receiver hub, which is at a fixed distance from the connector assembly, over an axis of the mobile device, where an anchor comprising magnetic material or a mechanical attachment apparatus is adhered to the surface of the mobile device, and the hub is attached to the anchor by magnetism also, so that it is simply and easily detachable and re-attachable. The connector is adjustable in the connector assembly to position the power receiver assembly flush with the surface of the mobile device. Alternate connector assemblies with differently configured connectors are attachable magnetically or mechanically to the power receiver assembly.

WO2005/060401 meanwhile describes a power transfer pad, having a non-conductive board having a top and a bottom plurality conductive substrates sections disposed across the top of the non-conductive board; at least one conducting element disposed on each of the conductive substrate sections; a plurality of electrical contacts on the bottom the non-conductive board, wherein each of the electrical contacts on the bottom of the non-conductive board are in electrical communication with one of the conductive substrate sections on the top of non-conductive board.

A general problem arising with these various technologies relates to the difficulties of channelling voltage at the proper level to the negative or ground and positive terminals of any device to be supplied, whilst avoiding short circuits or leakage currents through conductive articles or substances that may come into contact with the charging surface. Generally, the preceding prior art methods rely to some extent on the dimensions and/or physical disposition of the charging regions of the surface, and of dielectric regions between them on one hand, and the physical disposition of charging terminals on the device to be charged on the other hand. In the case of WO2017046458 these provisions are supplemented by measuring the current drawn by respective pads.

These approaches are not entirely satisfactory since they represent constraints on the layout of the charging surface and/or the contacts of the charging terminals of the device, yet cannot rule out the inadvertent creation of short circuits. Additionally, prior art approaches tend to require complex electronics in the device itself for the device to be effectively detected and distinguished. Still further, they tend to treat all and any connected devices as equal and interchangeable, with respect to their coupling characteristics and entitlement to connect, which may lead to difficulties in terms of over-voltage supply, over current supply, overheating and the like. It is thus as a consequence desirable to provide an arrangement offering improvements in these considerations.

### Summary of the invention

According to the present invention in a first aspect there is provided a coupling manager for managing a multimodal electrical coupling, in communication with a coupling communications interface for communicating with an article via the multimodal electrical coupling, the coupling manager further being in communication with a transducer module for electrical interaction via the multimodal electrical coupling, wherein the coupling manager is adapted to detect the electrical connection of the article across the coupling, and responsive to detection of the article, to cause the coupling communications interface to enter into bidirectional communications with the article to obtain data defining the article, the coupling manager being further adapted to determine whether the transducer module may interact with the article via the multimodal electrical coupling on the basis of the data defining the article, and in a case where it is determined the transducer module may interact with the article, causing the transducer module to interact via the multimodal electrical coupling.

According to a development of the first aspect, the coupling manager is further adapted in a case where it is determined that the transducer module may interact with the article, to isolate the coupling communications interface from the multimodal electrical coupling.

According to a development of the first aspect, the coupling manager is further adapted to maintain the coupling communications interface in isolation from the multimodal electrical coupling while the electrical connection of the article across the coupling is not detected.

According to a development of the first aspect, the coupling manager is further adapted to maintain the transducer module in isolation from the multimodal electrical coupling while the electrical connection of the article across the coupling is not detected.

According to a development of the first aspect, the data includes an identifier of the article, and wherein the coupling manager is adapted to determine whether the article is authorized for interaction with regard to the identifier, and wherein the coupling manager is adapted to determine that the transducer module may not interact with the article in a case where the identifier is determined not to be so authorized.

According to a development of the first aspect, the coupling manager further comprises an authorization communications interface, and wherein the coupling manager is further adapted to submit the identifier to an authorization resource via the authorization communications interface, and to receive an indication from the authorization communications interface whether the transducer module may interact with the article, and wherein the coupling manager is adapted to determine that the transducer module may not interact with the article in a case where the identifier is indicated not to be so authorized.

According to a development of the first aspect, the transducer module is a power supply module, and the interaction with the article comprises providing electrical power to the article via the multimodal coupling.

According to a development of the first aspect, the coupling module has access to a resource, and wherein the data includes a power requirements indicator of the article, and wherein the coupling manager is adapted to determine whether the power supply module is capable of meeting the power supply requirements of the article with regard to the power requirements indicator and with reference to power module capacity data stored in the resource, and wherein the coupling manager is adapted to determine that power may not be provided to the article in a case where it is determined that the power supply module is not capable of meeting the power supply requirements of the article.

According to a development of the first aspect, the coupling communications interface is adapted to emit communications signals encoded as time variant voltages over the multimodal electrical coupling having a mean voltage below the minimum voltage that the power supply module is adapted to provide.

According to the present invention in a second aspect there is provided a method of managing a multimodal electrical coupling, the method comprising the steps of detecting the electrical connection of an article across a multimodal electrical coupling,
responsive to detection of the article entering into bidirectional communications with the article over the multimodal electrical coupling, obtaining data defining the article via the bidirectional communication,
determining whether a predetermined electrical interaction with the article may occur with the article by a transducer module via the multimodal electrical coupling on the basis of the data defining the article, and in a case where it is determined that the predetermined interaction may occur with the article, causing a transducer module to perform the interaction via the multimodal electrical coupling.

According to a development of the second aspect, the method comprises the further step in a case where it is determined that the predetermined interaction may occur with the article, of isolating the coupling communications interface from the multimodal electrical coupling.

According to a development of the second aspect, the method comprises the further step of maintaining the coupling communications interface in isolation from the multimodal electrical coupling while the electrical connection of the article across the coupling is not detected.

According to a development of the second aspect, the method comprises the further step of maintaining the transducer module in isolation from the multimodal electrical coupling while the electrical connection of the article across the coupling is not detected.

According to a development of the second aspect, the data includes an identifier of the article, the method comprising the further step of determining whether the article is authorized for the predetermined interaction with regard to the identifier, and wherein the coupling manager is adapted to determine that the predetermined interaction may not be provided to the article in a case where the identifier is determined not to be so authorized.

According to a development of the second aspect, the transducer module is a power supply module, and the interaction with the article comprises providing electrical power to the article via the multimodal coupling.

According to a development of the second aspect, the data includes a power requirements indicator of the article, and wherein the method comprises a further step of determining whether the power supply module is capable of meeting the power supply requirements of the article with regard to the power requirements indicator and with reference to power module capacity, wherein it is determined that power may not be provided to the article in a case where it is determined that the power supply module is not capable of meeting the power supply requirements of the article.

According to the present invention in a third aspect there is provided program for a computer comprising instructions adapted to implement the steps of the second aspect.

### Brief Description of the Drawings

The above and other advantages of the present invention will now be described with reference to the accompanying drawings, for illustration purposes only, in which:
- Figure 1: presents aspects of the prior art approach provided by WO2017046458;
- Figure 2: presents aspects of the prior art approach provided by WO2017046458 in further detail;
- Figure 3: shows a coupling manager for managing a multimodal electrical coupling in accordance with a first embodiment;
- Figure 4: shows a coupling manager for managing a multimodal electrical coupling in accordance with a second embodiment;
- Figure 5: shows a coupling manager for managing a multimodal electrical coupling in accordance with a third embodiment;
- Figure 6: shows an article incorporating a first exemplary reporting interface;
- Figure 7: shows an article incorporating a second exemplary reporting interface;
- Figure 8a: provides a schematic representation of the relationship between an input voltage and an output voltage of a reporting interface as described with reference to figures 6 or 7;
- Figure 8b: provides a schematic representation of the relationship between an input voltage and an output voltage of a reporting interface as described with reference to figures 6 or 7;
- Figure 8c: provides a schematic representation of the relationship between an input voltage and an output voltage of a reporting interface as described with reference to figures 6 or 7;
- Figure 8d: provides a schematic representation of the relationship between an input voltage and an output voltage of a reporting interface as described with reference to figures 6 or 7;
- Figure 9: presents a method of managing a multimodal electrical coupling in accordance with an embodiment; and
- Figure 10: presents a method of managing a multimodal electrical coupling in accordance with a further embodiment.

### Detailed description

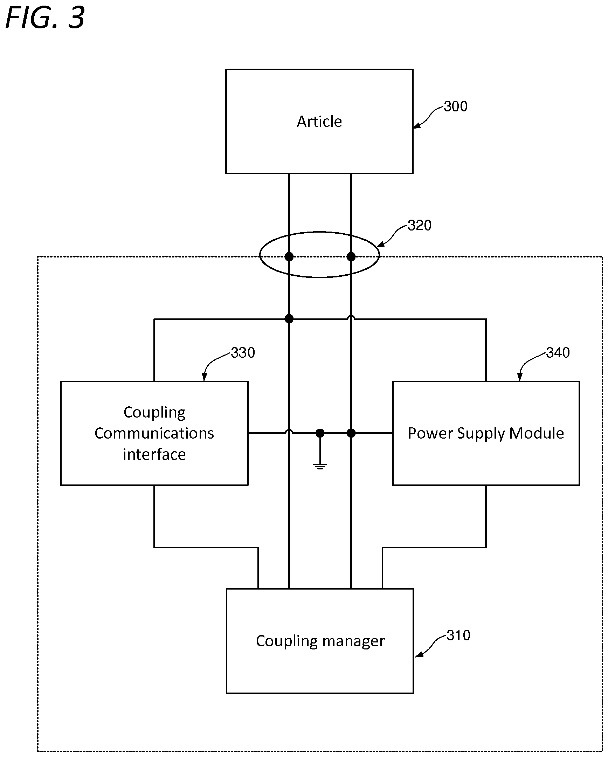

Figure 3 shows a coupling manager for managing a multimodal electrical coupling in accordance with a first embodiment.

As shown in figure 3, there is provided a coupling manager 310 in communication with a coupling communications interface 330. The coupling communications interface 330 is able to communicate with an article 300 via a multimodal electrical coupling 320.

The coupling as shown comprises two electrical contacts. One of these may comprise a ground connection, and as such might form part of a chassis, housing, ground plane or other part of the article.

The communication interface 330 may communicate with the article 300 by any convenient means. Indeed, it will be appreciated that communications may be distributed across a number of couplings. For example, USB communications are conventionally implemented across four connectors, of which two are coupled to fixed voltages (Ground and 5v) and two others carry communications signals. An embodiment of the invention might spread USB type communications across a pair of couplings as described herein. The communication interface may send and receive digital or analogue signals over the multimodal electrical coupling 320. Data may be encoded in these signals by means of mark-space ratio, one or more quantized voltage levels, Differential Signalling, Pulse Code Modulation (PCM), Delta Modulation, or any other convenient approach. In particular, communications may take place using standard communications such as those defined for standards such as USB, Singlewire and the like.

The coupling manager is also in communication with a transducer module 340. The transducer module may be a module capable of any predetermined electrical interaction with the article. The transducer module 340 may be a power supply module able to provide electrical power via the multimodal electrical coupling. The power supply may be able to provide one or more voltage levels. The power supply may be able to provide Alternative Current (AC), Direct Current (DC) or both. A current rating may be defined for one, some or each voltage level. Other power supply characteristics such as signal quality, internal resistance, AC or DC and the like may also be defined. The transducer module 340 may be an additional communication module able to communicate with the article or some subsystem or functionality of the article, for example in accordance with a communications mode other than that used by the communication interface 330. The transducer may be an interface to a communications bus.

The coupling manager 310 is adapted to detect the electrical connection of the article 300 across the coupling 320. The coupling manager may detect the electrical connection of the article 300 across the coupling 320 by any convenient means. For example, the coupling manager 310 may comprise detection circuitry able to detect a change of a capacitance and/or inductance and or resistance, and/or resistivity, or any other electrical characteristic measurable across the terminals of the coupling 320.

The coupling manager 310 is adapted to cause the coupling communications interface to enter into bidirectional communications with the article 300 in response to detection of the article. The coupling manager may emit an enabling signal to the coupling communications interface 330, or close a connection between the coupling communications interface 330 and the coupling 320, or close a connection between the coupling communications interface 330 and a power source to bring the coupling communications interface 330 into operation, or any other convenient mechanism.

The coupling communications interface 330 communicates with the article, to interrogate it to obtain data defining the article 300. If the article is able to receive, and respond to the communications, the information provided may comprise any of a wide range of characterizing data. In particular, the article may provide details concerning additional communications capabilities, and/or its power supply requirements, in particular a required voltage or voltage range. It may also provide an indication of peak current requirements. Still further, the details may comprise an identifier of the article itself, and/or of its owner or user.

Still further, the details may comprise the time, number and duration, and/or location (for example in terms of an identifier received from each instance of a coupling manager according to the present invention) of charging cycles in the article. The details may comprise an indicator of instantaneous or expected power requirements, including its current charge level, its current mode of operation (on, power saving, off, display on/off, screen brightness, network connection status, "airplane mode", free memory, and so on). In the case where the article is not able to receive and/or respond to the communications, such that the coupling communications interface 330 receives no meaningful response to its issued communication, the data obtained may be considered to constitute an indicator that the article is not able to receive and/or respond to the communications.

The coupling manager 310 is further adapted to determine whether the transducer module 340 may interact with the article 300 via the multimodal electrical coupling on the basis of the data defining the article. For the remainder of the description, embodiments will be described on the basis with reference to the transducer module being a power supply module, and the predetermined electrical interaction being the supply of electrical power. The skilled person will appreciate that the described embodiments may all be adapted to operation with any of the other types of transducer module and corresponding predetermined electrical interaction without additional inventive thought.

In a case where the data indicates that the article is not able to receive and/or respond to the communications, the coupling manager 310 may determine that power may not be provided to the article 300 by the power module. In other cases, the coupling manager 310 may compare the power supply requirements indicated by the apparatus with the power supply characteristics.

By way of example, a predefined set of power supply requirements might be defined, with corresponding requirements code, for example as illustrated below.

| Requirement code | V (V) | Imax (A) | Power Supply Module mode |
|---|---|---|---|
| 000 | 3.3 | 0.5 | 3.3v |
| 001 | 3.3 | 1 | 3.3v |
| 010 | 3.3 | 2 | OFF |
| 011 | 5.0 | 0.5 | 5v |
| 100 | 5.0 | 1 | 5v |
| 101 | 5.0 | 2 | OFF |
| 110 | 12 | 0.5 | OFF |
| 111 | 12 | 1 | OFF |

As shown, for a given Power Supply Module, a Power Supply Module mode is specified for each Requirement code. For this exemplary Power Supply Module, the available modes are "3.3v" or "5v", or "OFF".

In the present example, if the Article 300 returns Requirement code 000 or 001 or 011 or 100, the coupling manager 310 may determine that the Power Supply Module 340 may determine that power may be provided to the article.

In a case where it is determined that power may be provided to the article the coupling manager 310 causes the power supply module 340 to provide power at the multimodal electrical coupling.

The coupling manager may emit an enabling signal to the power supply module 340, or close a connection between the power supply module 340 and the coupling 320, or close a connection between the power supply module 340 and a power source to bring the power supply module 340 into operation, or any other convenient mechanism.

Optionally, the coupling manager 310 may be further adapted in a case where it is determined that power may be provided to the article, to isolate the coupling communications interface 330 from the multimodal electrical coupling. By this means, the coupling communications interface 330 is protected from high voltages or currents, or transient signals that may occur during the provision of electrical power to the Article. By the same token, the Power Supply Module is protected from high frequency components and other potentially damaging characteristics of the communications signals.

Optionally, the coupling manager 310 may be further adapted so that the Power Supply module is maintained in Isolation from the coupling communications interface 330 while communications are underway between the coupling communications interface 330 and the Article 300. By this means, the coupling communications interface 330 is protected from high voltages or currents, or transient signals that may occur during the provision of electrical power to the Article. By the same token, the Power Supply Module is protected from high frequency components and other potentially damaging characteristics of the communications signals.

Optionally, the coupling manager 310 may be further adapted to maintain the coupling communications interface in isolation from the multimodal electrical coupling 320 while the electrical connection of the article across the coupling is not detected. By this means, the coupling communications interface 330 is protected from high voltages or currents, short circuits, or transient signals that may occur across the multimodal electrical coupling 320 in the absence of an Article 300, for example due to conductive or electrically charged objects being brought into contact with the contacts of the multimodal electrical coupling 320 inadvertently.

Optionally, the coupling manager 310 may be further adapted to maintain the Power Supply Module 340 in isolation from the multimodal electrical coupling 320 while the electrical connection of the article across the coupling is not detected. By this means, the Power Supply Module 340 is protected from high voltages or currents, short circuits, or transient signals that may occur across the multimodal electrical coupling 320 in the absence of an Article 300, for example due to conductive or electrically charged objects being brought into contact with the contacts of the multimodal electrical coupling 320 inadvertently. While active, the coupling communication interface and the power supply module may be automatically disconnected whenever and as soon as a short circuit condition is detected with respect to either or both terminals thereof.

As mentioned above, the data retrieved from the Article may include an identifier of the article. Where this is the case, the coupling manager 310 may be adapted to determine whether the article is authorized for power coupling with regard to the identifier. The coupling manager 310 may further be adapted to determine that power may not be provided to the article in a case where the identifier is determined not to be so authorized. The identifier might indicate a class of product, a specific product type, or a specific individual product. It might also comprise a fingerprint of a product, as composed for example from a combination of identifiers of a number of components of a product, such that individual components might be changed without destroying the possibility of recognizing the product in question. Identifiers may include MAC addresses, IMSI codes, Processor Identifiers values and the like. It may also comprise identifiers such as product keys or license codes of software installed on the product, or a Hash or other characteristic representation of data present on the device. It may also comprise one or more identifiers of an owner, such as a name, email address, mobile telephone number, social security number, account code or the like. It may comprise a combination of any or all of these, or other such values as desired.

Where such identity information is available, the coupling manager 310 may have access to a repository containing information supporting the determination of whether or not a detected article is authorized for power supply. For example, power supply may be authorized for particular classes of device, and not others, for example to discourage the coupling of Articles whose dimensions do not correspond to the location of the coupling interface. Power supply may be authorized for particular device types, so as to offer charging only to certain premium products for example. Power supply may be authorized for a specific Article, or Articles associated with a specific user, so as to offer charging only to users having established an account or other suitable relationship with an entity providing the coupling interface.

As such the coupling manager may have access to a repository, such as a data repository.

The data may include a power requirements indicator of the article, and the coupling manager may be adapted to determine whether the power supply module is capable of meeting the power supply requirements of the article with regard to the power requirements indicator and with reference to power module capacity data stored in the repository, and wherein the coupling manager is adapted to determine that power may not be provided to the article in a case where it is determined that the power supply module is not capable of meeting the power supply requirements of the article.

The data may comprise an authorization token. Such a token may represent a right associated with an article or user to receive a charge, or a specified amount of energy, the right being expended by provision, by the coupling manager, of the specified charge or amount of power. Such a token may be protected cryptographically to prevent illicit creation of such tokens. The token may be cryptographically associated with the identity of the article or user, so that it is valid only for use by that article or user. The coupling manager may be configured to decode such tokens, and where they are found to be valid, to cause the Power Supply Module to provide power to the article as described above, to the limit of the specified amount. The Coupling manager may also be configured to submit tokens to an external authorization server as discussed further below for decoding and/or authorization with regard to centralized information. Whether or not tokens are submitted to an external authorization server for authorization, the coupling manager may report the redemption of the token to an external authorization server to prevent use of the same token with a different coupling manager. Tokens may be defined in a blockchain type structure.

It will also be appreciated that the identity considerations may also be combined with the power requirement considerations presented above. For example, the coupling manager 310 might enable power supply to any device whose requirements it could meet, but provide a higher current (and thereby faster charging) to devices whose identity corresponded to an entitlement to preferential treatment.

In certain embodiments, the coupling manager may be adapted to record information. In particular, it may be adapted to record some or all of the data obtained from any article 300 by means of the Coupling Communications Interface, whether or not an article was authorizes for power supply, what Power Supply Module settings were applied, and the time and/or duration of power supply.

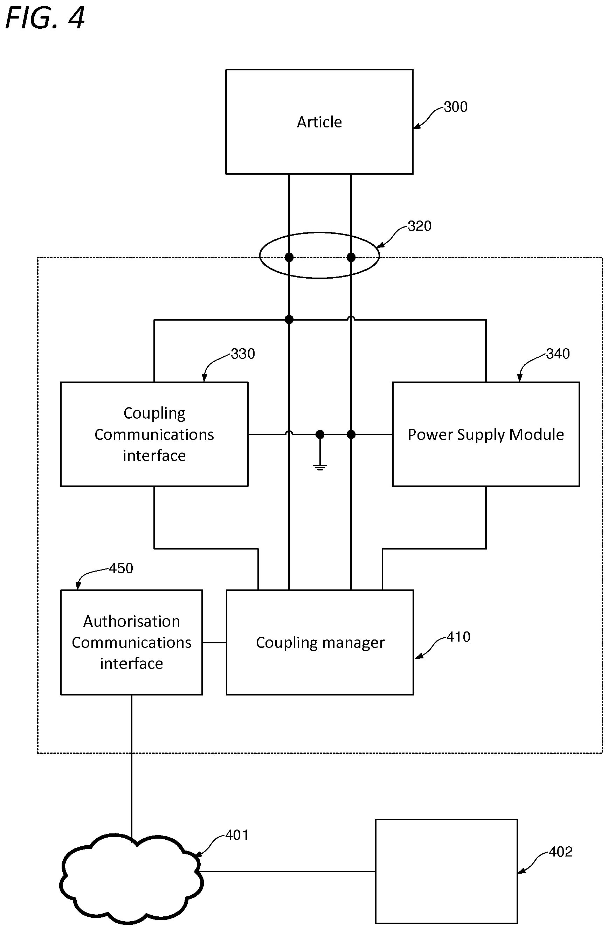

Figure 4 shows a coupling manager for managing a multimodal electrical coupling in accordance with a second embodiment.

The system of figure 4 comprises the Article 300, Coupling 320, Coupling communications interface 330 and Power Supply Module 340 substantially as described with reference to figure 3. The system of figure 4 further comprises an Authorizations communications interface 450 in communication with an authorization resource 402, via communications network 401. As mentioned above, the data retrieved from the Article may include an identifier of the article. Where this is the case, the coupling manager 410 may be adapted in accordance with this second embodiment to communicate with the resource 402 via the Authorization Communications Interface 450 to determine whether the article is authorized for power coupling with regard to the identifier. The Resource 402 may comprise a memory or database, comprising criteria permitting the determination of whether a particular Article may be authorized for power supply or not. For example, the resource may comprise a list of all classes of product, product types, specific products or other identifiers for which power supply may be authorized. It will be appreciated that many coupling managers, each managing a respective coupling, may communicate with a single resource, such that a particular device will be subject to the same authorization criteria for power supply from any coupling.

As such the coupling manager may further comprise an authorization communications interface, and the coupling manager may further be adapted to submit the identifier to an authorization resource via the authorization communications interface, and to receive an indication from the authorization communications interface whether power may be provided to the article, and the coupling manager may be adapted to determine that power may not be provided to the article in a case where the identifier is indicated not to be so authorized.

While the coupling interface of figures 3 and 4 is shown as comprising two simple electrodes, in certain embodiments a coupling interface having any number of conductive regions may be provided, for example as discussed with reference to figures 1 and 2.

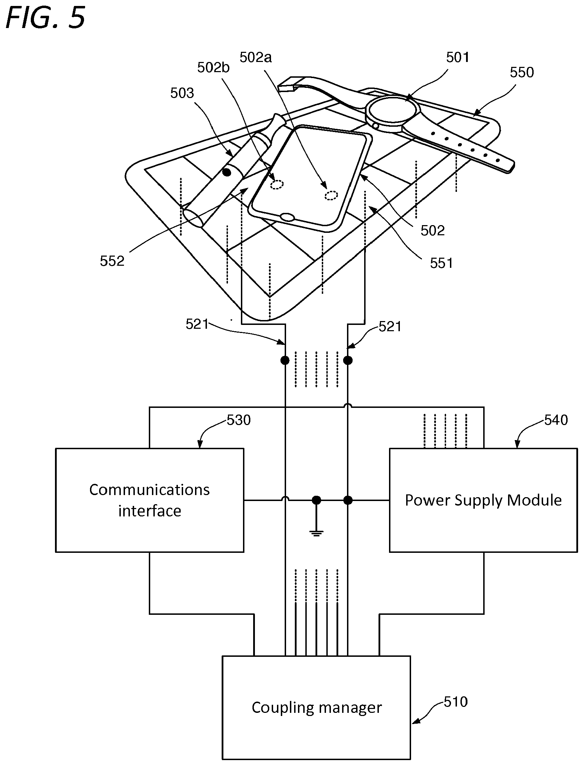

Figure 5 shows a coupling manager for managing a multimodal electrical coupling in accordance with a third embodiment.

As shown in figure 5, a surface 550 comprises a plurality of conductive regions 551, 552 etc. A plurality of articles including an e-cigarette 503, smart phone 502 and smart watch 501 are illustrated disposed on the surface 550. It will be appreciated that any article requiring electrical power may be envisaged in this context, including any IOT device, portable backup batteries, tablet computers, laptop computers, electric vehicles, surgical or medical equipment, power tools, etc. It will be appreciated that the present invention may be applied equally to any device able to benefit from a physical data or power connection. In particular, it is not limited in scale to small devices such as those shown, but may be extended to vehicles, rack mounted computer or communications equipment, medical devices, etc.

As shown, three articles 501, 502 and 503 are disposed on the surface 550. The surface 500 comprises a matrix of conductive regions 521, 522 etc. Each of these conductive regions is coupled to the coupling manager, the communications interface and the power supply module, so that each possible pair of conductive regions may constitute an instance of a multimodal electrical coupling in accordance with the present invention. As shown, articles 502 and 503 are devices susceptible to electrical connection. Article 502 has a negative power terminal 502a and a positive power terminal 502b by way of example. As discussed above, power requirements may vary from one device to the next. For example, Article 502 may require a 3.3V supply, whilst article 503 may require a 5V supply. In accordance with the embodiment the coupling manager 510 is able to detect the presence of each article coupled across any pair of conductive regions and to enter into communication with the article, determine whether power supply may be authorised, and in a case where power supply may be authorised, instigate power supply, substantially as described above. This might be achieved by cyclically measuring an electrical characteristic as mentioned above across each possible pair of conductive regions, simultaneously or sequentially measuring an electrical characteristic of each conductive region with regard to a reference point such as a ground terminal, a selected conductive region, or otherwise, or other any convenient mechanism. It will be appreciated on this basis that the Power Supply 540 may be able to provide power to a plurality of regions independently. Furthermore, Power Supply 540 may be able to provide different voltages, or power having other characteristics, independently to a plurality of regions, such that each article receives power meeting its individual requirements and/or consistent with its authorisation. The Power Supply module, Communications interface and Coupling manager may each comprise multiplexers enabling selective connection to respective conductive regions, for example under control of the coupling manager, so that appropriate connections may be made to appropriate regions at the appropriate time, in line with the articles determined to be present, their power requirements and authentication status, and their position on the surface 550. Equivalently, a central switching unit (not shown) might manage, for example under the control of the coupling manager, all connections between the Power Supply Module, The Communications interface and the coupling manager on one hand, and the conductive regions on the other. In the present example as shown, once the coupling manager 510 determines the presence of the article 502, whose terminals 502a and 502b are coupled across the conductive regions 551 and 552 respectively, the coupling manager 510 enables the communications Interface 530 to communicate with the article 502. The article 502 reports its power requirement, for example 5v. The Communications interface provides this information to the coupling manager which then enables to power supply module 540 to provide 5v to conductive region 502b, region 502a being coupled to ground. In this way, power is provided to the article 502 in accordance with its requirements. Conductive regions which are not required for power supply to an authorised article may be electrically isolated or coupled to ground as appropriate.

The foregoing embodiments introduce a coupling communications interface 330, 530, which communicates with coupled articles in order to obtain data defining the article, which the coupling manager 310, 410, 510 uses to determine whether power may be provided to the article. It will be appreciated that many articles of the types mentioned above may include communications facilities able to support these features with little or no modification. In other cases, the device may not incorporate the communications and processing systems required in view of its usual function (an e-cigarette for example may not typically be expected to incorporate advanced communications features), or the adaptation of the device to communicate via its power coupling may prove onerous or inconvenient. Where this is the case, a minimal reporting interface may be desirable, which may be incorporated in line with the power supply connections of a device independently of the other capacities of the device, and without modifying its power distribution architecture.

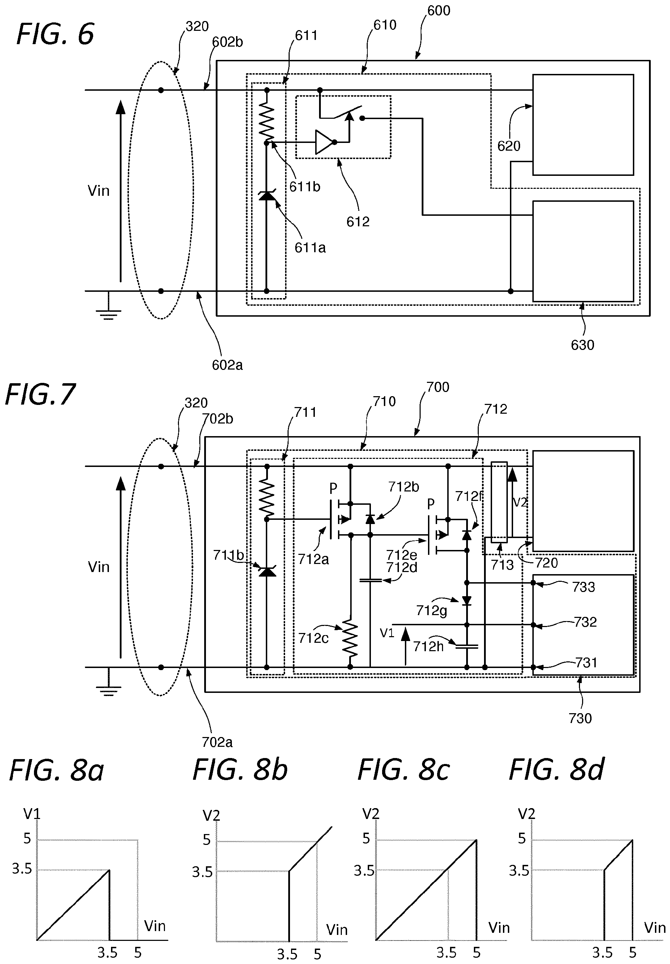

Figure 6 shows an article incorporating a first exemplary reporting interface.

As shown in figure 6, there is provided an article 600 comprising a reporting interface 610. The reporting interface 610 comprises a memory 630 operable at a first potential difference level. By way of example, the memory 630 may be operable at 3.3v. The term memory as used here reflects a capacity to store information that may be returned in response to communications for example as discussed above. It will be appreciated that this storage may be based on any convenient storage technology, and that the memory may comprise additional circuits for the interpretation of received signals and the formulation and transmission of responses in accordance with such received signals such as micro controllers. The reporting interface 610 further comprises a voltage modulator 611, 612 coupled across a first supply line 602a and a second supply line 602b. An operational circuit of the article 620 is also coupled across the first supply line 602a and a second supply line 602b. The article 600 may be of any of the types mentioned above, or otherwise, and the operational circuit will comprise whatever components of the article may benefit from the provision of power. The operational circuit will be operable at a voltage higher than the first potential difference level. In particular, the operational circuit may comprise a battery, and any accompanying charge management circuitry. The voltage modulator 612 is configured such that when a second potential difference level less than or equal to the first potential difference is present across the first supply line and a second supply line the first supply line and the second supply line are coupled to provide the second potential difference to the memory.

As shown, the voltage modulator 610 comprises a voltage threshold circuit 611 configured to output a voltage corresponding to the voltage across the first supply line and the second supply line up to a predetermined threshold voltage corresponding to the first potential difference level, and then remains clamped to that voltage when the voltage across the first supply line and the second supply line exceeds the predetermined threshold voltage corresponding to the first potential difference level. By way of example as shown, this may be achieved by means of a zener diode 611a in series with a resistor 611b, with the cathode of the zener diode coupled to the resistor and the anode coupled to the ground line 602a, the output of the circuit 611 being taken at the junction between the zener diode 611a and the resistor. Meanwhile, the reporting interface comprises a switching circuit 612, controlled by the output of the threshold circuit 611, so that a low voltage output by the threshold circuit 611, corresponding to a large potential difference between 602b and 611b, closes the switch to bring the memory 630 into communication with the power supply line 602b, and a voltage higher than the threshold voltage output by the threshold circuit 611 opens the switch to isolate the memory 630 into communication with the power supply line 602b.

Accordingly, if communications signals have a peak voltage lower than the first potential difference, the zener diode does not pass current and the voltage modulator 612 is active, so that the memory is coupled to the power lines, and receives the communications signals. When the Input voltage is higher than the Zener Voltage, the diode is passes current, and the MOSFET, decoupling the memory from the power lines thereby stopping the communication and protecting the memory. By this means, the voltage modulator 611, 612 discriminates between low voltage communications signals, and higher voltages intended for power supply to the operational circuit of the article 620. The memory is thus protected from potentially damaging voltages and currents on the power supply line 602b when this is being used to provide power to the operational circuit of the article 620, but remains receptive to communications signals that may be addressed to the memory 630 on the same power supply line 602b insofar as these are encoded at a peak voltage below the threshold voltage. Accordingly, the coupling communications interface may be adapted to emit communications signals encoded as time variant voltages over the multimodal electrical coupling having a mean voltage below the minimum voltage that the power supply module is adapted to provide.

Units 611 and 612 should be seen as functional units, which may be implemented in a number of manners which may occur to the skilled person.

In operation, the functional unit 612 disconnects the memory when the potential difference between the voltages provided by the element 611 and supply line voltage 602b exceeds a certain negative threshold. The unit 611 provides a voltage making it possible to exceed this threshold potential difference when the voltage of 602b is greater than or equal to the maximum voltage allowed for the memory.

In one exemplary implementation, the function 611 may be provided by a resistance in series with a zener diode. The anode of the zener diode may be connected to supply line 602a and the cathode provides the entrance voltage of the unit 612. The resistance R1 is placed between the supply line 602b and the cathode of the zener diode. When the potential difference between ground line 602a and supply line 602b is lower than the zener voltage of the diode, the diode acts as an open circuit and the resistance brings the entrance voltage of 612 to the value of supply line 602b. The voltage activating 612 is thus null. When the potential difference between lines 602a and 602b is greater than the zener voltage of the diode, the diode imposes this fixed voltage at its terminals, and the voltage activating unit 612 climbs until it reaches, and exceeds, the negative threshold, disconnecting the memory.

An alternative manner to implement the function of unit 611 may be to use a simple potential divider, with the center point connected to the entrance of unit 612, so that the zener diode is replaced with a further resistor R2 (not shown). In this case, the voltage activating unit 612 is defined by the relationship R1/((R1+R2)*(V602b-V602a)). In this case, the parameters R1 and R2 will be fixed such that the negative threshold is reached when the voltage on ground line 602b reaches the maximum voltage allowed for the memory. The skilled person will appreciate that many other reference devices may be used as desired. For example, a shunt, voltage divider circuit, op-amp circuit, and so on may all be adapted for use in embodiments.

The memory 630 may contain data defining the article 600, for example in any of the manners described above. As such, the arrangement of figure 6 is suitable for connection to the coupling communications interface and coupling manager as described above, such that when the coupling communications interface issues suitably formed communications these may be directed to the memory, which may return data defining the article in which it is incorporated, such that the coupling manager may then provide power at the requisite level to the operational circuit of the article 620 whilst the memory 630 is safely isolated, possibly in correspondence to the isolation of the communications interface as described above.

Accordingly, the memory may be adapted to send or receive data and/or addressing information via either the first supply line or the second supply line when the potential difference across the first supply line and the second supply line is not greater than the first potential difference level.

The voltage modulator may comprise a first switching device opening an electrical connection between the first supply line or the second supply line and the memory when the second potential difference level is greater than the first potential difference is present across the first supply line and a second supply line.

The first switching device may comprises a P-MOSFET transistor, whose gate is coupled to the connection between a resistance and a first zener diode coupled between the first supply line and the second supply line.

The general approach of the arrangement of figure 6 is to selectively connect the memory circuit to the supply lines, whilst maintaining the operational circuit in permanent connection. It will be appreciated that similar operating principles may be adapted to selectively connect the operational circuit to the supply lines, whilst maintaining the memory in permanent connection. Still further, it will be appreciated that similar operating principles may be adapted to selectively connecting either the operational circuit to the supply lines or the memory in permanent connection the supply lines at any given instant.

Figure 7 shows an article incorporating a second exemplary reporting interface.

As shown in figure 7, there is provided an article 700 comprising a reporting interface 710. The reporting interface 710 comprises a memory 730 operable at a first potential difference level. Reporting interface 710 further comprises a voltage modulator 711, 712 coupled across a first supply line 702a and a second supply line 702b. The article 700, reporting interface 710, memory 730 and voltage modulator 711, 712 are connected and operate substantially as described with respect to the article 600, reporting interface 610, memory 630 and voltage modulator 611, 612 with reference to figure 6 above. In figure 7 meanwhile, a more detailed implementation of the switching circuit 712, is shown by way of example. As shown, the switching circuit 712 comprises a first P channel MOSFET transistor 712a having its gate coupled to the output of the voltage threshold circuit 711, its source coupled to the positive supply line 702b, and its drain coupled to the ground line 702a via a resistance 712c and capacitor 712d arranged in parallel. The drain of first P channel MOSFET transistor 712a is also connected to the gate of a second P channel MOSFET transistor 712e. The source of the second P channel MOSFET transistor 712e is connected to the positive supply line 702b, and the drain is coupled to the ground line 702a via a diode 712g and a capacitor 712h in series, the anode of the diode 712g being coupled to the drain of second P channel MOSFET transistor 712e. The junction between the cathode of the diode 712g and the capacitor 712h is coupled to the input of the memory 730.

MOSFET 712a is activated when the negative threshold voltage between 702b and 711 output is reached. It will drive 712e MOSFET's gate from 702a voltage (because of 712c) to 702b voltage. This will close 712e MOSFET and disconnect the memory to 702b line protecting it against overvoltage. At lower voltage, when 712e is activated, current can flow from 702b line to the memory and charge the capacitance 712h.

As shown memory 730 comprises 3 inputs/output terminals 731, 732, 733. Terminal 731 is the ground connected directly to 702a, terminal 732 is a supply line connected to 712g cathode and terminal 733 is a communicating pin that is connected to 712g anode in order to be able to sense the voltage variations for communication without dependency on the charge/discharge status of 712h.

Capacitance 831d is provided for high speed communications at 3V, in order to prevent the gate 831f from closing too quickly when a 0bit is sent (Vin=0V). 831d keeps 831g gate negative for a small moment so that 820 can receive the 0bit.

During communication, when we send bit 1, the voltage is high so the memory has power but when we send bit 0 the voltage is close to 0V so the memory has to draw power from 712h. At that moment 712h is prevented from discharging through 702b by the diode 712g.

It will be appreciated that alternative functionally equivalent circuits may be envisaged by the skilled person, the arrangement of figure 7 being presented by way of example.

It will be appreciated that a reporting interface such as those provided above may comprise additional elements, providing additional features, represented schematically for example by element 713. For example the reporting interface may comprise elements provided to protect the memory and/or the operational circuit from an over voltage and/or an under voltage. For example, the reporting interface may comprise a second switching device opening the electrical connection between the first supply line or the second supply line and the operational circuit when a third potential difference level greater that than the first potential difference is present across the first supply line and a second supply line, so as to provide overvoltage and/or undervoltage protection of the operational unit 620, 720.

Similarly, the reporting interface may comprise an anti-inversion circuit coupling the first supply line and a second supply line, to ensure that one line, e.g. 702a is always the ground line, and the other line, e.g. 702b is always the positive voltage line.

Figure 8a provides a schematic representation of the relationship between an input voltage and an output voltage of a reporting interface as described with reference to figures 6 or 7.

As shown the x axis represents the input voltage measured across the first supply line 702a and second supply line 702b. The y axis represents the output voltage arriving at the memory 730, at the measured across the first supply line 702a and the point between capacitor 712h and diode 712g. As shown, the reverse breakdown voltage of the first zener diode 711b is set at 3.5v-the threshold voltage of the MOSFET 712a by way of example. On this basis, as the input voltage rises from 0v to 3.5v the output voltage rises proportionally. When the input voltage passes 3.5 volts the first zener diode begins to conduct and the switching unit opens, disconnecting the memory from the input voltage, so that the output voltage falls to zero.

Figure 8b provides a schematic representation of the relationship between an input voltage and an output voltage of a reporting interface comprising certain voltage control elements for example as described with reference to figures 6 or 7.

Specifically, figure 8b shows the voltage transfer characteristic in a case where the protection circuit 713 implements an under voltage protection behaviour to protect the operational circuit 720 from input voltages below that required for proper operation of the operational circuit, which by way of example is presented as 3.5v.

This functionality might be implemented by circuitry similar to that of elements 711 and 712. 711a may be swapped with 711b so the output voltage of block 711 is set left to 702a voltage until the Zener diode starts conducting which makes 711 start rising. 711's rising output can then activate an N MOSFET (which needs a positive threshold) that connects 702a to the operational circuit.

As shown the x axis represents the input voltage measured across the first supply line 702a and second supply line 702b. The y axis represents the output voltage arriving at the operating circuit 720, at the output measured across the voltage protection circuit 713. As the input voltage rises from 0v to 3.55v the output voltage remains at 0v. When the input voltage passes 3.5 volts the protection circuit 713 begins to conduct and the output voltage begins to rise together with the input voltage.

In combination with a coupling manager operating for example as described above, it can be ensured by such an operation that when the memory 730 is communicating with the communications interface such as 330, 530 at a lower voltage, the operational circuit is isolated from the communications signals exchanged by the memory and communications interface. As such, in such contexts the circuit protects the operational circuit not only from insufficient operating voltages, but also from high frequency communications signals which may interfere with or damage the operating circuit.

Figure 8c provides a further schematic representation of the relationship between an input voltage and an output voltage of a reporting interface as described with reference to figures 6 or 7.

Specifically, figure 8c shows the voltage transfer characteristic in a case where the protection circuit 713 implements an over- voltage protection behaviour to protect the operational circuit 720 from input voltages above that required for proper operation of the operational circuit, which by way of example is presented as 5v. This functionality might be implemented by circuitry similar to that of elements 711 and 712 as described above.

As shown the x axis represents the input voltage measured across the first supply line 702a and second supply line 702b. The y axis represents the output voltage arriving at the operating circuit 720, at the measured across output of the overvoltage protection circuit. As the input voltage rises from 0v to 5v the output voltage rises proportionally. When the input voltage passes 5 volts the protection circuit goes to an open circuit condition and the output voltage drops to 0v.

By this means, it can be ensured that the operational circuit is never exposed to an excessive supply voltage.

Figure 8d provides a further schematic representation of the relationship between an input voltage and an output voltage of a reporting interface as described with reference to figures 6 or 7.

Specifically, figure 8d shows the voltage transfer characteristic in a case where the protection circuit 713 implements an under-voltage protection behaviour as described with reference to figure 8b together with an over- voltage protection behaviour as described above with reference to figure 8c, to protect the operational circuit 720 from input voltages above or below that required for proper operation of the operational circuit, which by way of example is presented as 5v.

As shown the x axis represents the input voltage measured across the first supply line 702a and second supply line 702b. The y axis represents the output voltage arriving at the operating circuit 720, at the measured across output of the overvoltage protection circuit 713. As the input voltage rises from 0v to 3.55v the output voltage remains at 0v. When the input voltage passes 3.5 volts the protection circuit 713 begins to conduct and the output voltage begins to rise together with the input voltage. When the input voltage passes 5 volts the protection circuit goes to an open circuit condition and the output voltage drops to 0v.

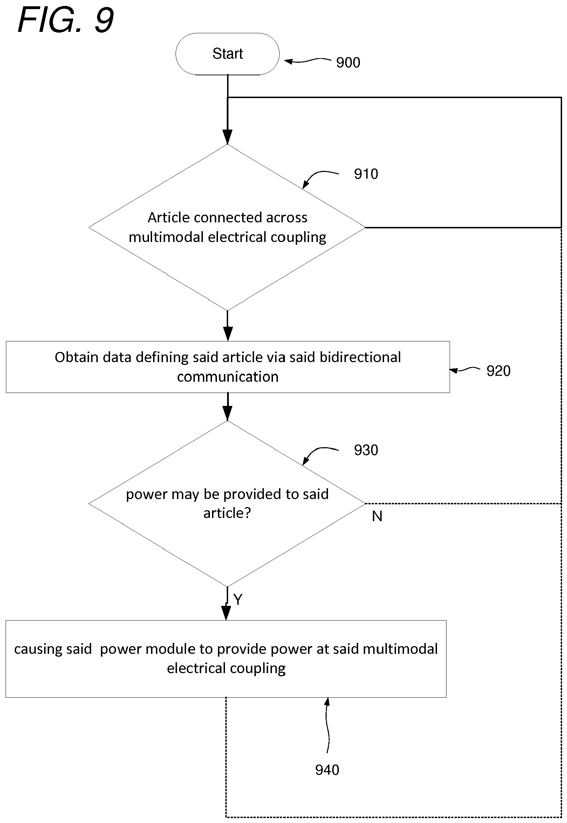

Figure 9 presents a method of managing a multimodal electrical coupling in accordance with an embodiment. As shown, the method starts at step 900 before proceeding to step 910 at which it is determined whether the electrical connection of an article across a multimodal electrical coupling is detected. In a case where no electrical connection of an article across the multimodal electrical coupling is detected, the method loops back to 910. When an electrical connection of an article across a multimodal electrical coupling is detected, the method proceeds to step 920, at which bidirectional communications with the article are entered into by a coupling communications interface over the multimodal electrical coupling and data defining the article obtained via the bidirectional communication. The method next proceeds to step 930 at which it is determined whether power may be provided to the article by a power module via the multimodal electrical coupling on the basis of the data defining the article. If it is determined at step 930 power may be provided to the article the method proceeds to step 940 of causing the power module to provide power to the multimodal electrical coupling. As shown, after step 940 the method loops back to step 910. In certain embodiments, the method may loop back to step 910 after a predetermined period. In certain embodiments, the method may loop back to step 910 via an additional set of steps waiting for the Article connected across the multimodal electrical coupling to be removed. If it is determined at step 930 power may not be provided to the article the method loops back to step 910. In certain embodiments, the method may loop back to step 910 after a predetermined period.

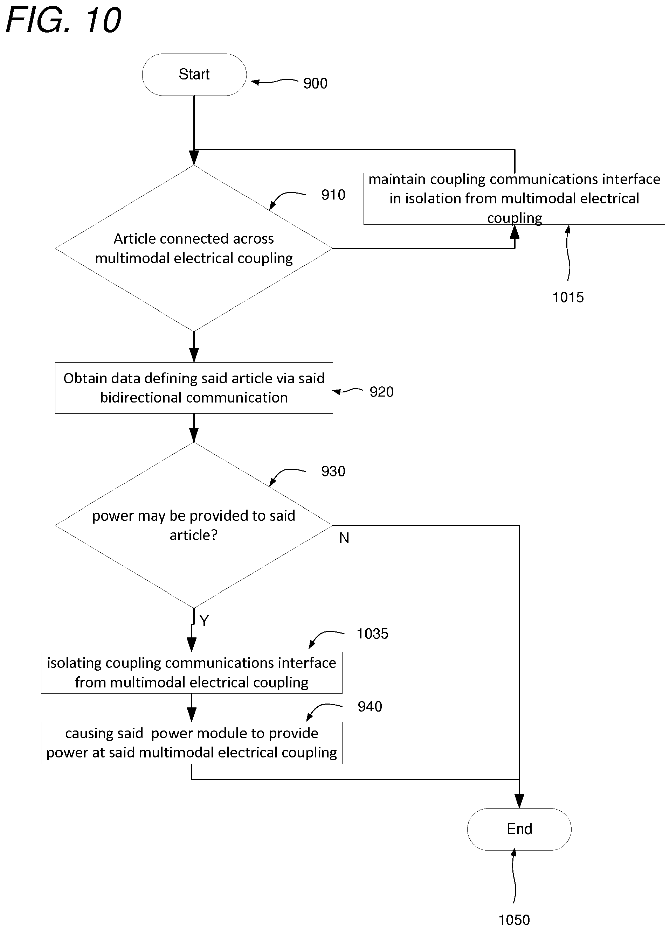

Figure 10 presents a method of managing a multimodal electrical coupling in accordance with a further embodiment.

The method of figure 10 comprises the steps 900, 910, 920, 930, 940 as described with regard to figure 9. Furthermore, there is provided an additional step 1015 of maintaining the coupling communications interface in isolation from the multimodal coupling in a case where no article is detected at step 910.

It will be appreciated that maintaining a functional unit in isolation may be achieved by means of an interface circuit of the functional unit itself. For example, a functional unit may be provided with one or more GPIO (General Purpose Input/Output), whose function may be programmatically controlled so that input and/or output is not enabled when the unit is to be isolated.

Additionally, there is provided an additional step 1035 of isolating the coupling communications interface in isolation from the multimodal coupling in a case where it is determined at step 930 that power may be provided to the article, before proceeding to step 940.

It will be appreciated that various permutations of the various possibilities of isolating certain elements at certain stages of the process may be envisaged. In particular, at start block 900 and end block 1050 the communications interface and power supply module may be isolated. The power supply module may be maintained in isolation as well as the coupling communications interface in the case where no article is detected at step 910.

The skilled person will recognise that the method of figures 9 and 10 are susceptible to various optional adaptations. For example, any of the steps of figure 10 may be incorporated independently to the method of figure 9. The methods may comprise an additional step of detecting removal of the article after power has been provided to it.

In certain embodiments, there may be provided an additional step of in a case where it is determined that power may be provided to the article, of isolating the coupling communications interface from the multimodal electrical coupling.

In certain embodiments, there may be provided an additional step of isolating the Power Supply Module from the multimodal electrical coupling while the coupling communications interface is in operation.

In certain embodiments, there may be provided an additional step of maintaining the coupling communications interface in isolation from the multimodal electrical coupling while the electrical connection of the article across the coupling is not detected.

In certain embodiments, there may be provided an additional step of maintaining the power supply module in isolation from the multimodal electrical coupling while the electrical connection of the article across the coupling is not detected, and while the communication has not determined whether power may be provided.

In certain embodiments, wherein the data includes an identifier of the article, there may be provided an additional step of determining whether the article is authorized for power coupling with regard to the identifier, and determine that power may not be provided to the article in a case where the identifier is determined not to be so authorized.

In certain embodiments, wherein the data includes a power requirements indicator of the article, there may be provided an additional step of determining whether the power supply module is capable of meeting the power supply requirements of the article with regard to the power requirements indicator and with reference to power module capacity, wherein it is determined that power may not be provided to the article in a case where it is determined that the power supply module is not capable of meeting the power supply requirements of the article.

The disclosed methods can take form of an entirely hardware embodiment (e.g. FPGA), an entirely software embodiment (for example to control a system according to the invention) or an embodiment containing both hardware and software elements. Software embodiments include but are not limited to firmware, resident software, microcode, etc. The invention can take the form of a computer program product accessible from a computer-usable or computer-readable medium providing program code for use by or in connection with a computer or an instruction execution system. A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

These methods and processes may be implemented by means of computer-application programs or services, an application-programming interface (API), a library, and/or other computer-program product, or any combination of such entities.

As such, there is provided a program for a computer comprising instructions adapted to implement the steps described with respect to figure 9 or 10.

In certain embodiments, a multimodal electrical coupling, which may be comprised of any pair of conductive regions in a surface, is selectively coupled to a coupling communications interface in response to the detection of an article connected across the terminals of the coupling. The coupling communications interface may obtain data characterising the article, and determine whether this information is consistent with the supply of power to the article, in particular in terms of the power requirements of the article, and/or the identity, and corresponding authorisation status of the article. Where supply of power is determined to be allowable, a Power Supply module may be brought into connection with the multimodal electrical coupling, at which time the coupling communications interface may be decoupled. A corresponding reporting interface for integration in articles is also presented.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A coupling manager for managing a multimodal electrical coupling, said coupling manager being in communication with a coupling communications interface for communicating with an article via said multimodal electrical coupling, said coupling manager further being in communication with a transducer module for electrical interaction via said multimodal electrical coupling, wherein said coupling manager is adapted to detect the electrical connection of said article across said coupling, and responsive to said detection of said article, to cause said coupling communications interface to enter into bidirectional communications with said article to obtain data defining said article, said coupling manager being further adapted to determine whether the transducer module may interact with the article via said multimodal electrical coupling on the basis of said data defining said article, and in a case where it is determined the transducer module may interact with the article, causing said transducer module to interact via said multimodal electrical coupling.

2. The coupling manager of claim 1 wherein said coupling manager is further adapted in a case where it is determined that the transducer module may interact with said article, to isolate said coupling communications interface from said multimodal electrical coupling.

3. The coupling manager of any preceding claim wherein said coupling manager is further adapted to maintain said coupling communications interface in isolation from said multimodal electrical coupling while the electrical connection of said article across said coupling is not detected.

4. The coupling manager of any preceding claim wherein said coupling manager is further adapted to maintain said transducer module in isolation from said multimodal electrical coupling while the electrical connection of said article across said coupling is not detected.

5. The coupling manager of any preceding claim wherein said data includes an identifier of said article, and wherein said coupling manager is adapted to determine whether said article is authorized for interaction with regard to said identifier, and wherein said coupling manager is adapted to determine that the transducer module may not interact with said article in a case where said identifier is determined not to be so authorized.

6. The coupling manager of claim 5, wherein said coupling manager further comprises an authorization communications interface, and wherein said coupling manager is further adapted to submit said identifier to an authorization resource via said authorization communications interface, and to receive an indication from said authorization communications interface whether the transducer module may interact with said article, and wherein said coupling manager is adapted to determine that the transducer module may not interact with said article in a case where said identifier is indicated not to be so authorized.

7. The coupling manager of any preceding claim wherein the transducer module is a power supply module, and said interaction with the article comprises providing electrical power to the article via the multimodal coupling.

8. The coupling manager of claim 7 wherein said coupling module has access to a resource, and wherein said data includes a power requirements indicator of said article, and wherein said coupling manager is adapted to determine whether said power supply module is capable of meeting the power supply requirements of said article with regard to said power requirements indicator and with reference to power module capacity data stored in said resource, and wherein said coupling manager is adapted to determine that power may not be provided to said article in a case where it is determined that said power supply module is not capable of meeting said power supply requirements of said article.

9. The coupling manager of any of claims 7 or 8 wherein said coupling communications interface is adapted to emit communications signals encoded as time variant voltages over said multimodal electrical coupling having a mean voltage below the minimum voltage that said power supply module is adapted to provide.

10. A method of managing a multimodal electrical coupling, said method comprising the steps of detecting the electrical connection of an article across a multimodal electrical coupling,
responsive to detection of said article entering into bidirectional communications with said article over said multimodal electrical coupling, obtaining data defining said article via said bidirectional communication,
determining whether a predetermined electrical interaction with the article may occur with said article by a transducer module via said multimodal electrical coupling on the basis of said data defining said article, and in a case where it is determined that said predetermined interaction may occur with said article, causing a transducer module to perform said interaction via said multimodal electrical coupling.

11. The method of claim 10 comprising the further step in a case where it is determined that said predetermined interaction may occur with said article, of isolating said coupling communications interface from said multimodal electrical coupling.

12. The method of claim 10 or 11 comprising the further step of maintaining said coupling communications interface in isolation from said multimodal electrical coupling while the electrical connection of said article across said coupling is not detected.

13. The method of any of claims 10 to 12 comprising the further step of maintaining said transducer module in isolation from said multimodal electrical coupling while the electrical connection of said article across said coupling is not detected.

14. The method of any of claims 10 to 13 wherein said data includes an identifier of said article, said method comprising the further step of determining whether said article is authorized for said predetermined interaction with regard to said identifier, and wherein said coupling manager is adapted to determine that said predetermined interaction may not be provided to said article in a case where said identifier is determined not to be so authorized.

15. The method of any of claims 10 to 14 wherein the transducer module is a power supply module, and said interaction with the article comprises providing electrical power to the article via the multimodal coupling.

16. The method of claim 15 wherein said data includes a power requirements indicator of said article, and wherein said method comprises a further step of determining whether said power supply module is capable of meeting the power supply requirements of said article with regard to said power requirements indicator and with reference to power module capacity, wherein it is determined that power may not be provided to said article in a case where it is determined that said power supply module is not capable of meeting said power supply requirements of said article.

17. A program for a computer comprising instructions adapted to implement the steps of any of claims 10 to 16.
